# NEUE EUROPÄISCHE PATENTSCHRIFT

(11) **EP 0 702 609 B2**
(45) Veröffentlichungstag und Bekanntmachung des Hinweises auf die Entscheidung über den Einspruch: **12.03.2003**
(45) Hinweis auf die Patenterteilung: 27.12.1996
(21) Anmeldenummer: 94916876.9
(22) Anmeldetag: 04.06.1994
(51) Int. Cl.: B23B 27/14

(54) **WENDESCHNEIDPLATTE**
THROWAWAY INSERT
PLAQUETTE A JETER

(30) Priorität: 12.06.1993 DE 4319505
(43) Veröffentlichungstag der Anmeldung: 27.03.1996
(73) Patentinhaber: WALTER AG, 72072 Tübingen (DE)
(72) Erfinder: VOLLMER, Rolf, D-72072 Tübingen (DE); STIHLER, Horst, D-72072 Tübingen (DE); BOHNET, Siegfried, D-72116 Mössingen (DE)
(74) Vertreter: Rüger, Rudolf, Dr.-Ing.
(86) Internationale Anmeldenummer: DE9400624
(87) Internationale Veröffentlichungsnummer: WO94029055

(56) Entgegenhaltungen:
- EP-A- 0 084 223
- EP-A- 0 160 278
- EP-A- 0 416 901
- EP-A- 0 458 003
- WO-A-94/16848
- DE-C- 877 531
- SE-B- 456 564
- US-A- 4 588 332
- US-A- 4 627 317
- TRANSACTIONS OF THE AMERICAN SOCIETY OF MECHANICAL ENGINEERS, Bd.107, Nr.2, Mai 1985, NEW YORK US Seite 100 KOMANDURI & LEE 'The Ledge Tool: A New Cutting Tool INsert'

## Beschreibung

Die Schneidkante an Wendeschneidplatten, die in Drehmeißeln oder Fräswerkzeugen eingesetzt werden, unterliegt einer Vielzahl unterschiedlicher Verschleißarten. Eine Verschleißart besteht darin, daß allmählich Material der Freifläche abgetragen wird, und zwar beginnend an der Schneidkante, wobei sich im Laufe der Zeit diese dadurch sichtbar werdende Verschleißmarke immer weiter über die Freifläche hinzieht. Im Bereich des Freiflächenverschleisses ist der Freiwinkel negativ, weshalb mit fortschreitendem Freiflächenverschleiß die erforderliche Schnitt- und Vorschubkraft ansteigt. Sobald die Verschleißmarke ein bestimmtes Maß erreicht hat, die etwa bei 0,3 bis 0,5 mm, gemessen ab der Schneidkante liegt, wird die Wendeschneidplatte als verschlissen angesehen und durch eine neue ersetzt.

Die Strecke, die bis zum Lebensdauerende der Schneidkante von dem Werkzeug im Eingriff mit einem Werkstück zurückgelegt wird, wird üblicherweise als Standstrecke bezeichnet. Die Standstrecke ließe sich grundsätzlich bei sonst gleichem Materialverhältnissen dadurch verbessern, daß der Schneidenkeilwinkel vergrößert wird, weil dadurch die Schneidenkante mehr Material enthält und es entsprechend länger dauert, bis die Verschleißgrenze erreicht ist. Allerdings geht ein vergrößerter Schneidenkeilwinkel zu Lasten des Freiwinkels und/oder des Spanwinkels, wodurch die Schnittkraft und/oder die Vorschubkraft ansteigt. Beides ist unerwünscht, weshalb die Schneidengeometrie immer ein Kompromiß aus Schnitt- und Vorschubkräften einerseits und Standstrecke andererseits ist.

Aus EP-A-0 416 901 ist eine Wendeschneidplatte bekannt, die eine ebene Grundfläche, eine von der Grundfläche beabstandeten ebene Oberseite und eine zwischen der Grundfläche und der Oberseite sich erstreckende Seitenwandordnung aufweist. Die Seitenwandordnung ist durch eine Knickkante, die unter einem spitzen Winkel zu der Schneidkante verläuft, in zwei ebene Abschnitte aufgeteilt, die unterschiedlichen Winkel zur Oberseite aufweisen. Die Knickkante mündet in die Schneidkante, so daß bei in einen Fräsergrundkörper eingebauter Wendeschneidplatte der Freiwinkel am voreilenden Ende von dem oberhalb der Knickkante liegenden Abschnitt gebildet wird. Der Freiwinkel am nacheilenden Ende entsteht duch den zweiten Abschnitt. Auf diese Weise soll auch bei positivem Axialwinkel der Freiwinkel längs der Schneidkante im wesentlichen gleich gehalten werden. Eine Standzeitverlängerung soll durch diese Geometrie nicht erreicht werden.

Aus "Werkstattblatt 516", Carl Hanser Verlag München, 1970 ist ein hintergeschliffener Scheiberfräser aus Naturstahl bekannt. Der Zahnform jedes Zahns des Scheibenfräsers weist eine zurückversetzte zweite Freifläche auf, damit der Fräser gegenüber dem Flugkreis genügend freigestellt ist und damit eine Nachschleifung der Zähne erleichtet wird. Die Breite der unmittelbar an die Schneidkante angrenzenden ersten Freifläche ist wesentlich größer als die Verschleißgrenze, denn sonst wäre das in dieser Druckschrift erläuterte Nachschleifen nicht möglich.

Aus der DE-PS 877 531 ist es darüber hinaus bei eingelöteten Schneideinsätzen bekannt, eine Nase anzuschleifen, so daß die Freifläche gegenüber einem unterhalb der Freifläche liegenden Bereich des Hartmetallschneidplättchens vorspringt. Allerdings sind hierbei der Freiwinkel und der Winkel, den der unterhalb der Freifläche liegende Bereich mit der Lotrechten einschließt, gleich groß. Die Nase soll 0,4 mm oder mehr betragen.

In dem Artikel "Production Technology Abroad" ist eine Schneidengeometrie beschrieben, bei der die Freifläche an einer Leiste ausgebildet ist, die über den darunter befindlichen Bereich der Seitenwandanordnung auskragt. Die Höhe der Leiste, gemessen in Schnittrichtung, ist ca halb so groß wie die schließlich erreichte Verschleißmarke. Die Leiste geht mit einem scharfen Knick in den darunter liegenden Teil über. Über die Art der Herstellung der Schneidengeometrie ist dem Aufsatz nichts zu entnehmen.

Ausgehend von diesem Stand der Technik ist es Aufgabe der Erfindung, eine Hartmetall-Schneidplatte zu schaffen, die kostengünstiger herzustellen ist.

Diese Aufgabe wird erfindungsgemäß durch die Schneidplatte mit den Merkmalen des Anspruches 1 gelöst.

Bei der neuen Schneidplatte bildet nicht mehr der gesamte, sich an die Schneidkante anschließende Bereich der Seitenwandanordnung die Freifläche, sondern nur jener Teil, der zwischen der Schneidkante und dem in der Seitenwandanordnung vorgesehenen Rücksprung liegt. Durch diese Maßnahme wird erreicht, daß der Freiflächenverschleiß, gemessen in Richtung senkrecht zu der Schneidkante, auf den Bereich zwischen der Schneidkante und dem Rücksprung begrenzt ist. Somit bleibt die Vorschubkraft über eine wesentlich längere Standstrecke, verglichen mit einer Schneidplatte ohne den Rücksprung, innerhalb bestimmter Maximalgrenzen, weil zunächst einmal das Material der durch den Rücksprung definierten Leiste abgetragen wird und dann noch das Material zur Verfügung steht, wie es beim Verschleiß einer normalen Schneidplatte ohne den Rücksprung möglich bzw. vorhanden ist. Es leuchtet ohne weiteres ein, daß durch die Wahl der Tiefe des Rücksprungs in weiten Grenzen die Standwegverlängerung variiert werden kann, wobei mit zunehmender Tiefe des Rücksprungs die Schneidkante wegen der stärkeren Ausladung an Stabilität einbüßt. Allerdings ist insbesondere beim Schlichten, wo mit kleinen Schnittkräften gearbeitet wird, ohne weiteres eine größere Ausladung möglich, verglichen mit Schruppoperationen, die wegen der großen Spandicke große Schnittkräfte senkrecht zu der Schneidkante entstehen lassen.

Der Übergangsbereich zwischen der Freifläche und der an den Rücksprung angrenzende Bereich der Seitenwandanordnung, der bis zu der Rückseite führt, ist abgeschrägt ausgeführt, wodurch scharfkantige Übergänge, die zu Ausbrüchen neigen, weitgehend vermieden sind.

Je nach Anwendungsgebiet der Schneidplatte kann der Rücksprung etwa parallel zu der Schneidkante verlaufen oder es kann sich die Breite der durch den Rücksprung definierten Leiste längs der Schneidkante verändern.

Da es bei Schneidplatten, die an mehrereren winklig zueinander verlaufenden Schneidkanten gleichzeitig Material abtragen, wünschenswert ist, wenn alle Schneidkanten etwa gleichzeitig verschlissen sind, d.h. dieselbe Standstrecke aufweisen, kann es zweckmäßig sein, diesen die Leiste definierenden Rücksprung weitgehend längs dem gesamten Umfang der Schneidplatte, die dann eine Wendeschneidplatte sein kann, fortzusetzen. Es kann aber auch zweckmäßig sein, diesen Rücksprung nur bei einigen Schneidkanten aller an der Schneidplatte ausgebildeten Schneidkanten vorzusehen, wenn dies beispielsweise aus Gründen der Befestigung der Schneidplatte in dem Werkzeuggrundkörper von Vorteil ist.

Auch bei der Verwendung sogenannter runder und somit kegelstumpfförmiger Schneidplatten bietet die neue Ausgestaltung der Seitenwandanordnung erhebliche Vorteile.

Selbstverständlich sind bei der neuen Ausgestaltung der Seitenwandanordnung mit Rücksprung alle bei Schneidplatten üblichen Freiwinkel, bezogen auf die Plattengeometrie möglich, d.h. der Freiwinkel kann, bezogen auf die Schneidplatte O° groß sein, womit eine Neutralplatte entsteht oder der Freiwinkel kann positiv, d.h. größer als O° sein. Grundsätzlich ist es sogar denkbar, bei der neuen Schneidplatte eine Freifläche mit negativem Freiwinkel vorzusehen, womit bei der Schneidplatte die Vorschubkräfte über die gesamte Standstrecke nahezu konstant sind und nicht in einem beim Beginn des Einsatzes liegenden Abschnitt deutlich kleiner sind als im späteren Betrieb.

Genauso gut ist es möglich, den Freiwinkel der Freifläche bei der neuen Schneidplatte längs der Schneidkante, also längs der Seitenwandanordnung kontinuierlich oder sprunghaft zu verändern.

In der Zeichnung ist ein Ausführungsbeispiel des Gegenstandes der Erfindung dargestellt. Es zeigen:
- Fig. 1: eine Wendeschneidplatte in einer perspektivischen Darstellung,
- Fig. 2: einen Schnitt durch die Wendeschneidplatte nach Fig. 1,
- Fig. 3: die Darstellung der Wendeschneidplatte aus Fig. 2, unter Veranschaulichung des fortschreitenden Verschleisses im Bereich der Freifläche und
- Fig. 4: eine runde Wendeschneidplatte gemäß der Erfindung, in perspektivischer Darstellung.

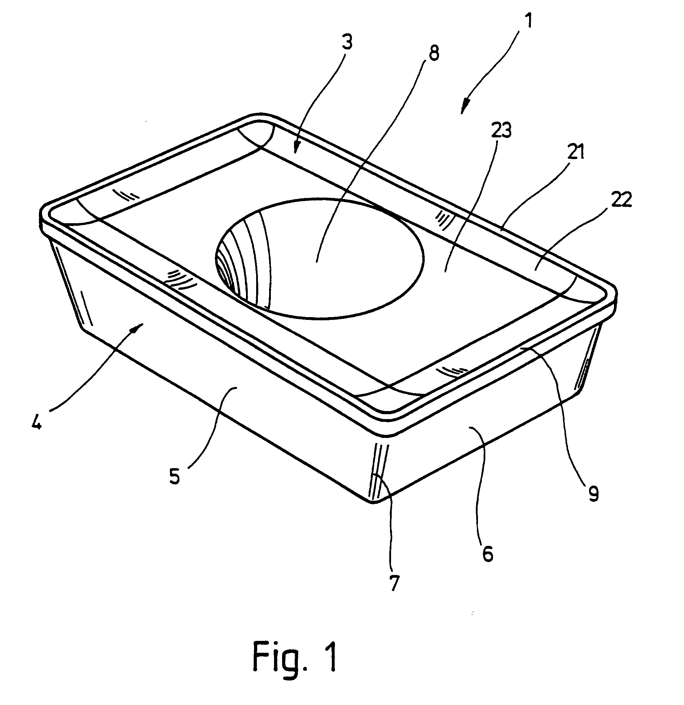

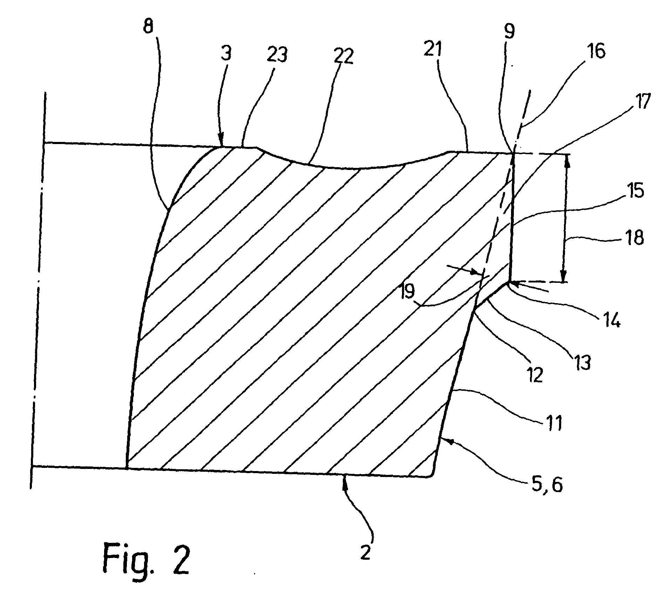

Die Fig. 1 und 2 zeigen eine viereckige Wendeschneidplatte 1 mit etwa pyramidenstumpfförmiger Gestalt. Die Wendeschneidplatte 1 weist eine ebene Grundfläche 2 und eine davon beabstandete Oberseite 3 auf. Zwischen der Grundfläche 2 und der Oberseite 3 erstreckt sich eine Seitenwandanordnung 4, die sich aus insgesamt vier paarweise zueinander parallelen Seitenflächen 5, 6 zusammensetzt. Wegen der paarweisen Anordnung gibt es zu der langen Seitenfläche 5 eine entsprechend punktsymmetrische, dem Betrachter von Fig. 1 abgekehrte Seitenfläche, ebenso wie ein Gegenstück zu der Seite 6 vorhanden ist. Die Seitenflächen 5, 6 stoßen jeweils an verrundeten Ecken 7 aneinander.

Mittig durch die Wendeschneidplatte 1 führt eine Befestigungsöffnung 8 hindurch, in die zur Anbringung der Wendeschneidplatte 1 in einem entsprechenden Plattensitz eine Befestigungsschraube einzuführen ist.

Der Übergang von den Seitenflächen 5, 6 zu der Oberseite 3 bildet Schneidkanten 9, die im Bereich der Seitenflächen 5, 6 Hauptschneiden und im Bereich der verrundeten Ecken 7 Nebenschneiden sind.

Die Struktur der Seitenflächen ergibt sich aus Fig. 2. Um das Erfindungswesentliche erkennen zu können, ist der Maßstab in Fig. 2 gegenüber der Darstellung in Fig. 1 verzerrt.

Hiernach besteht die Seitenfläche 5 bzw. 6 aus einem bei der Grundfläche 2 beginnenden geraden Abschnitt 11, der an einem Knick 12 in eine Übergangsfläche 13 übergeht. Die Übergangsfläche 13 endet an einem Knick 14, von wo aus eine weitere Fläche 15 bis zu der Schneidkante 9 führt. Die Fläche 15 stellt für die Schneidkante 9 die Freifläche dar.

Wie die Figur erkennen läßt, ist die Freifläche 15 gegenüber einer gedachten Verlängerung des Seitenflächenabschnittes 11 erhaben, mit anderen Worten, die Seitenflächen 5, 6 enthalten einen von den Knicken 12, 14 und der Übergangsfläche 13 gebildeten Rücksprung, so daß oberhalb des Knicks 12 auf der gedachten Verlängerung des Seitenflächenabschnittes 11, der durch eine gestrichelte Linie 16 veranschaulicht ist, eine Leiste 17 entsteht.

Der Rücksprung entsprechend der Übergangsfläche 13 verläuft etwa parallel zu der Schneidkante 9 und die Breite der Freifläche 15, die durch einen Doppelpfeil 18 gekennzeichnet ist und sich von der Schneidkante 9 bis zu dem Knick 14, an dem der Rücksprung beginnt, erstreckt, entspricht etwa der Breite der Verschleißmarke auf der Freifläche einer nach dem Stand der Technik, also ohne den Rücksprung hergestellten Wendeschneidplatte, jeweils bezogen auf die gewünschte Bearbeitungsqualität, die Schnitt- und die Vorschubkräfte und das verwendete Material. In Millimetern ausgedrückt, bedeutet dies eine Breite zwischen O,O 5 mm und 1 mm.

Die Tiefe des Rücksprungs, gemessen als der Abstand des Knicks 14 von der Geraden oder Fläche 16, die an dem Knick 12 den Seitenflächenabschnitt 11 stetig fortsetzt, und der in der Fig. 2 mit 19 bezeichnet ist, ergibt sich aus der gewünschten Standwegverbesserung und der einzuhaltenden Festigkeit. Die Tiefe 19 des Rücksprungs kann zwischen 0,02 und O,9 mm betragen.

Der Freiwinkel der Freifläche 15, gemessen als Winkel gegenüber der Senkrechten, auf einer durch die Grundfläche 2 definierten Ebene wird, wie bei Wendeschneidplatten nach dem Stand der Technik bemessen und richtet sich nach dem Einsatzgebiet der Wendeschneidplatte 1 und dem jeweils zu zerspanenden Werkstoff.

In Fig. 2 ist eine Wendeschneidplatte 1 veranschaulicht, bei der der Freiwinkel O° beträgt, d.h. die Wendeschneidplatte 1 muß zum Erzielen eines positiven Freiwinkels entsprechend negativ gebettet werden.

Wie die Fig. 1 erkennen läßt, folgt dort zwar der Rücksprung im wesentlichen der Kontur der Schneidkante 9, d.h. die Freifläche 15 ist überall gleich breit; es ist aber auch möglich, abweichend von der Darstellungsform, die Breite der Freifläche 15 längs der Schneidkante 9 zu variieren und beispielsweise im Bereich der Seitenfläche 6 eine andere Breite vorzusehen als im Bereich der Seitenfläche 5. Schließlich muß die Freifläche 15 nicht notwendigerweise eben sein, sondern es kann sich der Freiwinkel der Freifläche 15 auch längs der Schneidkante 9 ändern, was insbesondere bei der Verwendung in Schaftfräsern von Vorteil ist.

Schließlich besteht die Möglichkeit, die Schneidkante 9 nicht als gerade Kante auszuführen, sondern entsprechend der Struktur der Oberseite 3 mehr oder weniger geschwungen auszuführen. Auch in diesem Falle kann die Leiste 17 verwendet werden.

Die Oberseite 3 der Wendeschneidplatte 1 ist in bekannter Weise gestaltet und es ist in den Figuren lediglich beispielhaft eine gebräuchliche Ausführungsform dargestellt. Hiernach beginnt an der Schneidkante 9 eine ebene Fasenfläche 21, die in einem Abstand von ca. O,1mm bis O,2 mm in eine Mulde 22 übergeht. Die Mulde 22 stößt in Richtung auf das Innere der Oberseite 3 an eine ebene Plateaufläche 23 an, in der sich die Durchgangsbohrung 8 befindet. Die Fasenfläche 21 zusammen mit der Mulde 22 bildet in bekannter Weise die Spanfläche zur Formung des Spans.

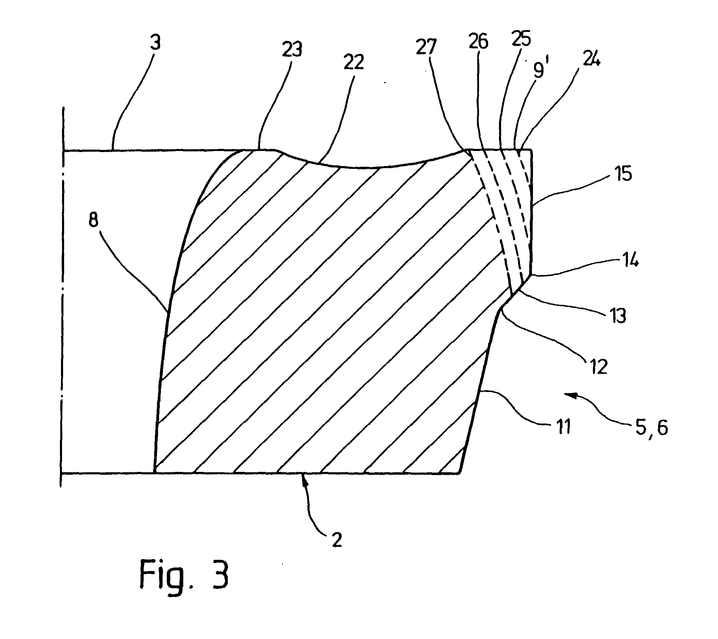

Die Wirkungsweise der neuen Freiflächengeometrie ist nachfolgend anhand von Fig. 3 erläutert.

Wenn beim Einsatz der neuen Wendeschneidplatte 1 infolge der spanabhebenden Bearbeitung die zunächst, abgesehen von einer werksseitigen Verrundung möglichst eckige Schneidkante 8 abgetragen bzw. abgeschliffen wird, ergibt sich zunächst eine Kontur, wie sie durch eine gestrichelte Linie 24 dargestellt ist. Dabei ist die Schnittlinie zwischen der Fläche 24 mit der Fasenfläche 21 dann die aktuelle wirksame Schneidkante 9', während am unteren Ende die durch den Abrieb entstandene Fläche 24 in die ursprüngliche Freifläche 15 übergeht, und zwar deutlich oberhalb des Knicks 14.

Mit weiterer Abnutzung wandert die Fläche 24 in Richtung auf den Mittelpunkt der Wendeschneidplatte
1. Durch eine weitere strichpunktierte Linie 25 sei eine Momentaufnahme einer dann vorhandenen Plattengeometrie veranschaulicht. Diese strichpunktierte Linie 25, die wiederum der durch die Abnutzung entstandenen Freifläche entspricht, endet an ihrem oberen Ende etwa in der Mitte der gezeigten Fasenfläche 21 und reicht unten gerade bis zu dem Knick 14. Mit anderen Worten, die durch die strichpunktierte Linie 25 repräsentierte Verschleißmarke hat nun etwa die Größe erreicht, bei der bei einer Wendeschneidplatte nach dem Stand der Technik die Verschleißgrenze erreicht wäre, weil ab diesem Punkt die Vorschubkraft zu stark ansteigen würde, denn die Verschleißmarke würde entsprechend der Neigung des Seitenflächenabschnittes 11 bzw. dem Freiwinkel der ursprünglichen Freifläche 15 im Falle einer neutralen Platte schnell weiter zunehmen. Nicht jedoch bei der Erfindung, weil dort ab dem Knick 14 der Rücksprung beginnt und sich somit die Verschleißmarke nur entsprechend der Neigung der Übergangsfläche 13 weiter verbreitert, wenn der Verschleiß von der Linie 25 sich in Richtung zur Plattenmitte und damit in Richtung auf eine gestrichelte Linie 26 verlagert. Obwohl sich die mit dem Werkstück in Eingriff stehende Fläche entsprechend der Linie 26 von der Linie 25 etwa genauso weit entfernt hat,wie es dem Abstand zwischen der Linie 24 und der Linie 25 entspricht, ist die Verschleißmarke, die auf der entsprechenden Seitenwand 5, 6 zu sehen ist, gegenüber dem Zustand entsprechend der Linie 25 nicht nennenswert breiter geworden, womit die Vorschubkraft auch nur entsprechend geringfügig angestiegen ist.

Sinngemäß kann nun die Wendeschneidplatte 1 weiter abgenutzt werden und es verlagert sich die Kontaktfläche zwischen der Wendeschneidplatte 1 und dem Werkstück bis zu einer gestrichelten Linie 27, die an ihrem unteren Ende immer noch die Übergangsfläche 13 schneidet.

Aus der schematischen Darstellung der Fig. 3 ist deutlich zu erkennen, daß bei einer Wendeschneidplatte nach dem Stand der Technik die Lebensdauer etwa dann erreicht ist, wenn die Wendeschneidplatte bis zu der Linie 25 abgetragen ist. Bei der durch den Rücksprung und somit mit der Leiste 17 versehenen neuen Wendeschneidplatte 1 ist hingegen eine wesentlich größere Lebensdauer und damit Standstrecke zu erreichen, weil die Wendeschneidplatte 1 ohne weiteres bis über die Verschleißmarke entsprechend der Linie 25 hinaus verwendet werden kann, da nach wie vor die Breite der Verschleißmarke auf der Seitenfläche 5 bzw. 6 innerhalb des von dem Anwender vorgesehenen Bereiches bleibt. Erst wenn schließlich die Abnutzung der Wendeschneidplatte so weit fortgeschritten ist, daß eine zu der Linie 27 parallel verlaufende und noch weiter zum Inneren der Wendeschneidplatte 1 hin verlagerte Fläche entsteht, die bei dem Knick 12 in den Seitenflächenabschnitt 11 übergeht, ist die neue Wendeschneidplatte 1 verbraucht, denn von nun an würde sie sich so verhalten wie eine Wendeschneidplatte nach dem Stand der Technik, allerdings bereits dann, wenn dort ein Verschleiß entsprechend der Linie 25 entstanden ist.

Die Neigung, die die Übergangsfläche 13 gegenüber einer Senkrechten auf die Grundfläche 2 hat, sollte im Sinne der Erfindung möglichst nahe bei 9O° gewählt werden. Da jedoch solche Übergangsflächen bei gesinterten Hartmetallwendeschneidplatten schwer herzustellen sind, verläuft die Übergangsfläche 13 nicht parallel zu der Grundfläche 2, sondern in einem spitzen Winkel geneigt, um ausbruchgefährdete Übergänge an den Knickstellen 12 und 14 zu vermeiden.

Die Tiefe des Rücksprungs 19 richtet sich dagegen ausschließlich nach der Bruchfestigkeit, die notwendig ist. Je weiter die Leiste 17 auskragt, umso größer ist selbstverständlich die Verlängerung der Standstrecke der neuen Wendeschneidplatte 1 gegenüber einer Wendeschneidplatte nach dem Stand der Technik. Dafür wird unter Umständen die Bruchfestigkeit im Bereich der Schneidkante 9 vermindert, weshalb die Auskragung und somit die Tiefe 19 der Leiste 17 entsprechend zurückgenommen werden muß.

Obzwar in Fig. 2 die Darstellung so gewählt ist, daß die Verlängerung 16 des Seitenflächenabschnittes 11 durch die Schneidkante 9 der jüngfräulichen Wendeschneidplatte 1 verläuft, muß diese Bedingung zum Erzielen der oben beschriebenen Vorteile nicht eingehalten werden. Es liegt an den sonstigen Sitzbedingungen für die Wendeschneidplatte 1, ob die Verlängerung 16 links oder rechts von der Schneidkante 9, bezogen auf die Darstellung von Fig. 2, vorbeigeht.

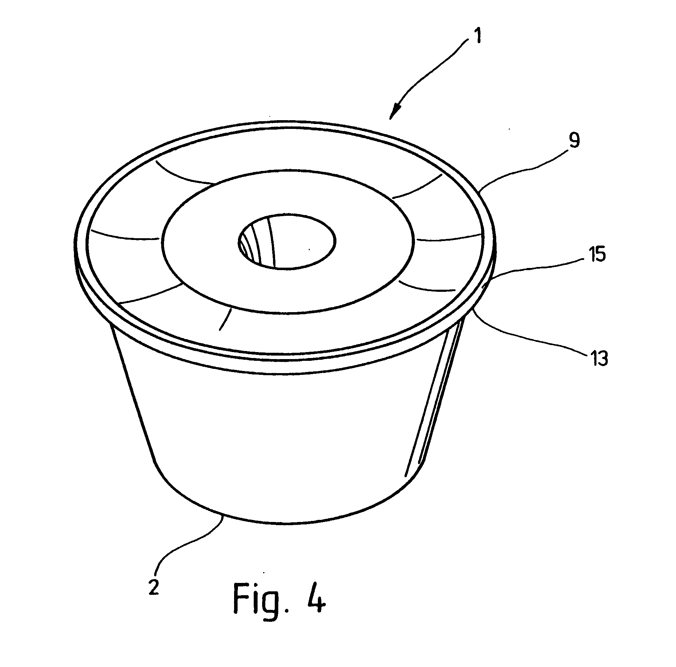

Die erfindungsgemäße Seitenflächengeometrie ist, wie Fig. 4 erkennen läßt, auch auf kegelstumpfförmige runde Wendeschneidplatten 1 anwendbar. Hierbei führt die durch den Rücksprung entsprechend der Übergangsfläche 13 begrenzte Freifläche 15 parallel zu der Schneidkante 9 verlaufend um den ganzen Umfang der Wendeschneidplatte 1 herum. Die Seitenwandstruktur ist im übrigen entsprechend der Seitenwandstruktur gemäß den Fig. 1 bis 3 ausgeführt.

## Patentansprüche

1. Zur Sinterverfahren hergestellte Hartmetallen Wendeschneidplatte (1), die eine im wesentlichen kegelstumpf- oder pyramidenstumpfförmige Gestalt aufweist,
mit einer im wesentlichen ebenen Grundfläche (2),
mit einer von der Grundfläche (2) beabstandeten ebenen oder strukturierten Oberseite (3),
mit einer Seitenwandanordnung (4) und mindestens einer Schneidkante (9)
mit einem in der Seitenwandanordnung (4) enthaltenen Rücksprung (13), der zumindest angenähert dem Verlauf der Schneidkante (9) folgt und ausgehend von der Schneidkante (9) eine erhabene Leiste (17) entstehen läßt, welche die Freifläche (15) trägt, wobei
- zu der Leite (17) eine Übergangsfläche (13) gehört, die in einem spitzen Winkel geneigt verlaüft, um ausbruck gefährdete übergänge an Knickstellen zu vermeiden,
- die Breite (18) der Freifläche (15) einschließlich der Übergansfläche (13) gemessen in Richtung senkrecht zu der Schneidkante (9), etwa der Größe der zulässigen Verschleißmarke der Freifläche (15), gemessen in derselben Richtung entspricht,
- der Rücksprung eine Tiefe (19) aufweist, die zwischen 0,02 mm und 0,5 mm liegt, wobei Tiefen größer oder gleich 0,4 mm ausgenommen sind, und
- der Freiwinkel betragsmäßig kleiner ist als der Winkel zwischen der Senkrechten auf die Grundfläche und der Seitenwandanordnung (4).
Übrige Ansprüche unverändert.

2. Wendeschneidplatte nach Anspruch 1, **dadurch gekennzeichnet, daß** die Breite der Freifläche (15) zwischen 0,05 mm und 1,0 mm beträgt.

3. Wendeschneidplatte nach Anspruch 1, **dadurch gekennzeichnet, daß** die Leiste (17) im wesentlichen volständig um die Wendeschneidplatte längs der Seitenwandanordnung (4) herumführt.

4. Wendeschneidplatte nach Anspruch 1, **dadurch gekennzeichnet, daß** sie eine drei oder mehreckige Wendeschneidplatte ist, an deren Nebenschneiden Ecken ausgebildet sind, und daß an mindestens einer Nebenschneiden der eine Leiste (17) definierende Rücksprung (13) enthalten ist.

5. Wendeschneidplatte nach Anspruch 1, **dadurch gekennzeichnet, daß** der Freiwinkel der Freifläche (15) der Leiste (17) 0° oder größer als 0° oder negativ ist.

6. Wendeschneidplatte nach Anspruch 1, **dadurch gekennzeichnet, daß** der Winkel gemessen zwischen der Grundfläche (2) und der Seitenwandanordnung (4) längs der Schneidkante größer oder kleiner wird.

7. Wendeschneidplatte nach Anspruch 1, **dadurch gekennzeichnet, daß** sich der Freiwinkel der Freifläche längs der Schneidkante kontinuierlich oder sprunghaft ändert.

## Claims

1. Carbide indexable insert which is produced by a sintering process and essentially has the shape of a frustum of a cone or a frustum of a pyramid,
having an essentially flat base (2),
having a flat or structured top (3) at a distance from the base (2),
having a side wall arrangement (4) and at least one cutting edge (9),
having an offset (13) which is contained in the side wall arrangement (4), at least approximately follows the course of the cutting edge (9) and, starting from the cutting edge (9), allows a raised strip (17) to be produced which has the flank (15), in which arrangement
- the strip (17) includes a transition surface (13) which runs inclined at an acute angle in order to avoid transitions at bends, these transitions being at risk of chipping,
- the width (18) of the flank (15) including the transition surface (13), measured in a direction perpendicular to the cutting edge (9), corresponds approximately to the size of the admissible wear mark of the flank (15), measured in the same direction,
- the offset has a depth (19) which is between 0.02 mm and 0.5 mm, depths greater than or equal to 0.4 mm being excepted, and
- the clearance angle is smaller than the angle between the perpendicular to the base and the side wall arrangement (4).

2. Indexable insert according to Claim 1, **characterized in that** the width of the flank (15) is between 0.05 mm and 1.0 mm.

3. Indexable insert according to Claim 1, **characterized in that** the strip (17) leads essentially completely around the indexable insert along the side wall arrangement (4).

4. Indexable insert according to Claim 1, **characterized in that** it is a triangular or polygonal indexable insert, on the secondary cutting edges of which corners are formed, and **in that** the offset (13) defining a strip (17) is contained on at least one secondary cutting edge.

5. Indexable insert according to Claim 1, **characterized in that** the clearance angle of the flank (15) of the strip (17) is 0° or greater than 0° or negative.

6. Indexable insert according to Claim 1, **characterized in that** the angle measured between the base (2) and the side wall arrangement (4) becomes larger or smaller along the cutting edge.

7. Indexable insert according to Claim 1, **characterized in that** the clearance angle of the flank changes continuously or abruptly along the cutting edge.

## Revendications

1. Plaquette de coupe (1) fabriquée par un procédé de frittage, présentant une forme essentiellement de tronc de cône ou de tronc de pyramide,
avec une surface de base (2) essentiellement plane,
avec une face supérieure (3) plane ou structurée distante de la surface de base,
avec un ensemble de parois latérales (4) et au moins une arête de coupe (9),
avec un épaulement (13) faisant partie de l'ensemble de parois latérales (4), qui suit au moins approximativement le contour de l'arête de coupe (9) et forme, à partir de l'arête de coupe (9), un rebord (17) saillant qui porte la face de dépouille (15),
le rebord (17) comprenant une surface de raccordement (13) qui est inclinée suivant un angle aigu aux fins d'éviter des raccordements favorisant les ruptures au niveau des angles,
la largeur (18) de la face de dépouille (15) y compris de la surface de raccordement (13), mesurée dans la direction perpendiculaire à l'arête de coupe (9), correspond sensiblement au repère d'usure admissible de la face de dépouille (15), mesurée dans la même direction,
l'épaulement présente une profondeur (19) qui est comprise entre 0,02 mm et 0,5 mm, des profondeurs supérieures ou égales à 0,4 mm étant exclues,
et l'angle de dépouille est inférieur en valeur à l'angle entre la perpendiculaire à la surface de base et l'ensemble de parois latérales (4).

2. Plaquette de coupe selon la revendication 1, **caractérisée par le fait que** la largeur de la face de dépouille (15) est comprise entre 0,05 mm et 1,0 mm.

3. Plaquette de coupe selon la revendication 1, **caractérisée par le fait que** le rebord (17) est présent pratiquement sur tout le pourtour de la plaquette de coupe, le long de l'ensemble de parois latérales (4).

4. Plaquette de coupe selon la revendication 1, **caractérisée par le fait qu'**il s'agit d'une plaquette triangulaire ou polygonale avec des angles au niveau de ses arêtes secondaires et **par le fait que** le rebord (17) qui forme l'épaulement (13) fait partie d'au moins une arête secondaire.

5. Plaquette de coupe selon la revendication 1, **caractérisée par le fait que** l'angle de dépouille du rebord (17) est égal à 0° ou est supérieur à 0° ou est négatif.

6. Plaquette de coupe selon la revendication 1, **caractérisée par le fait que** l'angle mesuré entre la surface de base (2) et l'ensemble de parois latérales (4) croît ou décroît le long de l'arête de coupe.

7. Plaquette de coupe selon la revendication 1, **caractérisée par le fait que** l'angle de dépouille de la surface de dépouille varie de manière progressive ou par paliers le long de l'arête de coupe.
